(19) **Europäisches Patentamt European Patent Office Office européen des brevets**

(11) **EP 4 486 676 B1**

(12) **EUROPEAN PATENT SPECIFICATION**

(45) Date of publication and mention
of the grant of the patent:
**06.08.2025 Bulletin 2025/32**

(21) Application number: **22709718.5**

(22) Date of filing: **02.03.2022**

(51) International Patent Classification (IPC):
**B66B 5/02** *(2006.01)*

(52) Cooperative Patent Classification (CPC):
**B66B 5/027**

(86) International application number:
**PCT/EP2022/055242**

(87) International publication number:
**WO 2023/165688 (07.09.2023 Gazette 2023/36)**

(54) **A SOLUTION FOR DETECTING AN ENTRAPMENT SITUATION INSIDE AN ELEVATOR CAR**

LÖSUNG ZUM NACHWEIS EINER EINKLEMMSITUATION IN EINER AUFZUGSKABINE

SOLUTION DESTINÉE À DÉTECTER UNE SITUATION DE PIÉGEAGE À L'INTÉRIEUR D'UNE CABINE D'ASCENSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.01.2025 Bulletin 2025/02**

(73) Proprietor: **KONE Corporation**
**00330 Helsinki (FI)**

(72) Inventors:
• **HAQ, Zuhair ul**
**00330 Helsinki (FI)**
• **ZAKRZEWSKI, Mari**
**00330 Helsinki (FI)**
• **PEKANDER, Otto**
**00330 Helsinki (FI)**

(74) Representative: **Berggren Oy**
**P.O. Box 16**
**Eteläinen Rautatiekatu 10A**
**00101 Helsinki (FI)**

(56) References cited:
CN-B- 107 324 166      JP-A- 2003 040 541
JP-A- 2011 068 440

## Description

TECHNICAL FIELD

The invention concerns in general the technical field of elevator. Especially the invention concerns detection of entrapment situations of elevator cars.

BACKGROUND

The safety of passengers is one of the most important safety factors in elevators. For example, if an elevator system becomes inoperable, e.g. due to a failure of one or more elevator entities of the elevator system, the safety of the passengers is of utmost importance. When the elevator system becomes inoperable, the passengers may be entrapped inside the elevator cars. Usually, in such entrapment situation, the passengers have to manually contact service providers to inform the service providers of the inoperable condition of the elevator system and to evacuate the passengers from the elevator cars. Typically, the failures of the elevator system may be detected at a remote monitoring and service center. However, information about possible entrapment situations is not available at the remote monitoring and service center.

There exist sensor-based solutions that may be used to detect the entrapment situations. For example, weight measuring devices may be used to detect an object inside the elevator car. However, it is not possible to recognize whether the detected object is a passenger or a non-human object, e.g. load.

Thus, there exists a need to develop further solutions to detect entrapment situations inside elevator cars in case of an elevator system becomes inoperable.

A patent publication CN 107 324 166 B discloses a method and system for detecting a passenger trapping accident in an elevator. Firstly, when the elevator is in an idle state, a background image in an elevator car is obtained, and the positions of static pixel points in the background image are determined. Then, when the elevator is in a fault state, a current image in the elevator car is obtained, and differential treatment is conducted on the pixel value of the background image and the pixel value of the current image to obtain a differential image.

SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method, an elevator computing unit, a detection system, and a computer program for detecting an entrapment situation inside an elevator car. Another objective of the invention is that the method, the elevator computing unit, the detection system, and the computer program for detecting an entrapment situation inside an elevator car improve safety of an elevator system.

The objectives of the invention are reached by a method, an elevator computing unit, a detection system, and a computer program as defined by the respective independent claims.

According to a first aspect, a method for detecting an entrapment situation inside an elevator car is provided, wherein the method comprises: receiving an inoperable notification indicating an inoperable condition of the elevator car; obtaining from at least one imaging device arranged inside the elevator car real-time image data of the interior of the elevator car in response to receiving the inoperable notification; detecting one or more human objects inside the elevator car by performing a detection procedure based on the obtained real-time image data and at least one previously generated reference image, wherein generating of the at least one reference image comprises: obtaining from the at least one imaging device random image data of the interior of the elevator car, wherein the random image data comprises a plurality of images captured in a plurality of random reference scenarios, and processing the obtained random image data to generate the at least one reference image; and generating to an elevator control system and/or to a service center a signal indicating a detection of the entrapment situation in response to the detecting the one or more human objects.

The detection procedure may comprise: an object detection phase comprising detecting one or more objects inside the elevator car, and a human object detection phase comprising identifying one or more human objects from among the detected one or more objects.

The object detection phase may comprise: a frame subtraction comprising a subtraction operation between one real-time image of the obtained real-time image data and the respective reference image to generate a difference image representing differences between the at least one real-time image and the respective reference image; and an image thresholding comprising filtering the generated difference image by using a threshold value to divide the pixels of the generated difference image into object pixels and background pixels to detect the one or more objects inside the elevator car, wherein the threshold value may be defined based on lighting conditions of the elevator car.

The human object detection phase may comprise: eliminating static objects from the detected one or more objects by using multiple consecutive real-time images of the obtained real-time image data to categorize the detected one or more objects into moving objects and static objects based on pixel wise changes in the multiple consecutive images, the static objects may be eliminated from the detected one or more objects; and deciding whether one or more human objects are detected inside the elevator car.

The human object detection phase may further comprise defining a confidence score for each detected one or more human objects, wherein each human object with the defined confidence score being lower than a specific threshold may be removed from the detected one or more human objects.

The plurality of reference scenarios may comprise at least multiple empty elevator car scenarios and further one or more non-empty elevator car scenarios.

The processing of the obtained random image data may comprise performing a median operation on pixel values of the plurality of images of the random image data to generate the at least one reference image.

According to a second aspect, an elevator computing unit for detecting an entrapment situation inside an elevator car is provided, wherein the elevator computing unit comprises: a processing unit comprising at least one processor; and a memory unit comprising at least one memory including computer program code, wherein the at least one memory and the computer program code are configured to, with the at least one processor, cause the elevator computing unit to perform: receive an inoperable notification indicating an inoperable condition of the elevator car; obtain from at least one imaging device arranged inside the elevator car real-time image data of the interior of the elevator car in response to receiving the inoperable notification; detect one or more human objects inside the elevator car by performing a detection procedure based on the obtained real-time image data and at least one previously generated reference image, wherein to generate the at least one reference image the elevator computing unit is configured to: obtain from the at least one imaging device random image data of the interior of the elevator car, wherein the random image data comprises a plurality of images captured in a plurality of random reference scenarios, and process the obtained random image data to generate the at least one reference image; and generate to an elevator control system and/or to a service center a signal indicating a detection of the entrapment situation in response to the detecting the one or more human objects.

The detection procedure may comprise: an object detection phase comprising detecting one or more objects inside the elevator car, and a human object detection phase comprising identifying one or more human objects from among the detected one or more objects.

The object detection phase may comprise that the elevator computing unit is configured to perform: a frame subtraction comprising a subtraction operation between one real-time image of the obtained real-time image data and the respective reference image to generate a difference image representing differences between the at least one real-time image and the respective reference image; and an image thresholding comprising filtering the determined difference image by using a threshold value to divide the pixels of the generated difference image into object pixels and background pixels to detect the one or more objects inside the elevator car, wherein the threshold value may be defined based on lighting conditions of the elevator car.

The human object detection phase may comprise that the elevator computing unit is configured to: eliminate static objects from the detected one or more objects by using multiple consecutive real-time images of the obtained real-time image data to categorize the detected one or more objects into moving objects and static objects based on pixel wise changes in the multiple consecutive images, the static objects may be eliminated from the detected one or more objects; and decide whether one or more human objects are detected inside the elevator car.

The human object detection phase may further comprise that the elevator computing unit is configured to define a confidence score for each detected one or more human objects, wherein each human object with the defined confidence score being lower than a specific threshold may be removed from the detected one or more human objects.

The plurality of reference scenarios may comprise at least multiple empty elevator car scenarios and further one or more non-empty elevator car scenarios.

The processing of the obtained random image data may comprise that the elevator computing unit is configured to perform a median operation on pixel values of the plurality of images of the random image data to generate the at least one reference image.

According to a third aspect, a detection system for detecting an entrapment situation inside an elevator car is provided, wherein the detection system comprises: at least one imaging device arranged inside the elevator car, and an elevator computing unit as described above.

According to a fourth aspect, a computer program is provided, wherein the computer program comprises instructions which, when the program is executed by a computer, cause the computer to carry out the method as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

BRIEF DESCRIPTION OF FIGURES

The embodiments of the invention are illustrated by way of example, and not by way of limitation, in the figures of the accompanying drawings.

Figure 1 illustrates schematically an example implementation of a detection system for detecting an entrapment situation inside an elevator car.

Figure 2 illustrates schematically an example of a method for detecting an entrapment situation inside an elevator car.

Figure 3 illustrates schematically an example of a method for generating a reference image.

Figure 4 illustrates schematically an example of a detection procedure to detect one or more human objects.

Figure 5 illustrates schematically an example of components of an elevator computing unit.

DESCRIPTION OF THE EXEMPLIFYING EMBODIMENTS

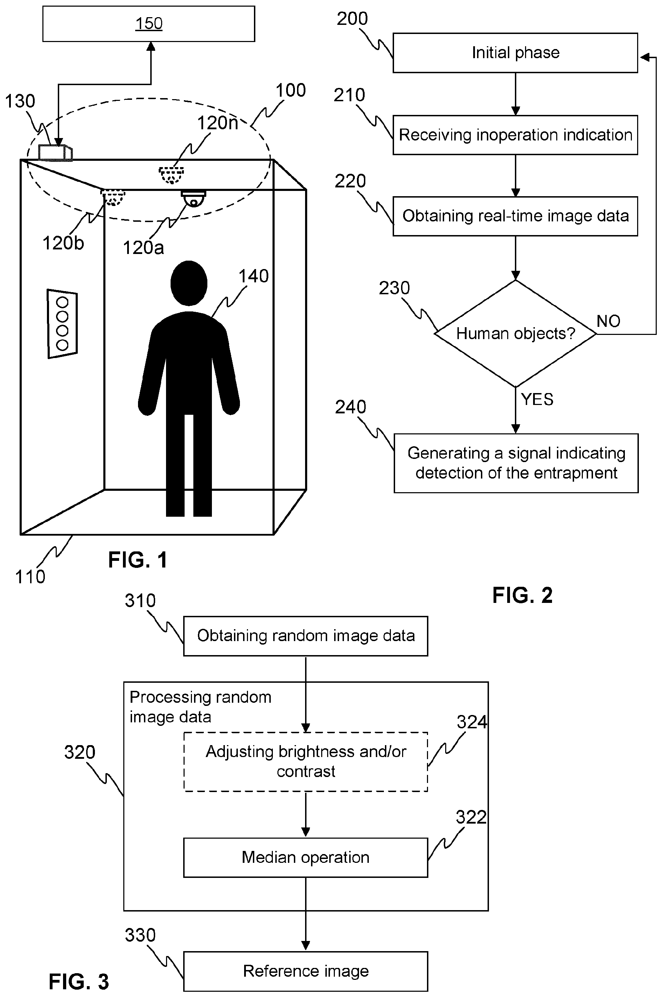

Figure 1 illustrates schematically an example implementation of a detection system 100 for detecting an entrapment situation inside an elevator car 110. In the example of Figure 1 the detection system 100 is implemented in the elevator car 110. The detection system 100 comprises at least one imaging device 120a-120n and an elevator computing unit 130. The at least one imaging device 120a-120n is communicatively coupled to the elevator computing unit 130. The communication between the at least one imaging device 120a-120n and the elevator computing unit 130 may be based on one or more known communication technologies, either wired or wireless.

The at least one imaging device 120a-120n is arranged inside the elevator car 110. The at least one imaging device 120a-120n may provide image data from inside of the elevator car 110. The image data provided by the at least one imaging device 120a-120n may comprise one or more images and/or video image comprising a plurality of consecutive images, i.e. frames. Preferably, the detection system 100 comprises one imaging device 120a-120n. However, more than one imaging device 120a-120n may be used to achieve better coverage of the elevator car 110 with the image data, which improves the accuracy and reliability of the detection of the entrapment situation inside the elevator car 110 with the detection system 100. In the example of Figure 1 three non-limiting example placements for the at least one imaging device 120a-120n are illustrated. These three non-limiting example placements comprises: a middle placement (e.g. the imaging device 120a is placed in the middle placement), a corner placement (e.g. the imaging device 120b is placed in the corner placement, and a ceiling placement (e.g. the imaging device 120n is placed in the ceiling placement). The middle placement may be at the middle of a back wall of the elevator car 110 as illustrated in Figure 1. Alternatively, the middle placement may be at the middle of any other wall of the elevator car 110. The corner placement may be at an upper back corner of the elevator car 110 as illustrated in Figure 1. The upper back corner of the elevator car 110 may be either one the upper back corners of the elevator car 110. In the example of Figure 1, the imaging device 120n is placed in the left-hand side upper back corner of the elevator car 110, but alternatively or in addition the imaging device 120a-120n may be placed in the righthand side upper corner. Alternatively, the corner placement may be at an upper front corner of the elevator car 110. The upper front corner of the elevator car 110 may be either one the upper front corners of the elevator car 110. The detection system 100 of the example of Figure 1 comprises one imaging device, i.e. the imaging device 120a illustrated with the solid line, placed in the middle placement. The imaging devices 120b and 120n illustrated with dashed lines in the example of Figure 1 illustrate other example placements for the one imaging device. In other words, the detection system 100 may alternatively comprise one imaging device placed in other placement, e.g. the imaging device 120b placed in the corner placement or the imaging device 120n placed in the ceiling placement. Alternatively, the detection system 100 may also comprise more than one imaging device, e.g. at least two imaging devices 120a-120n each placed in one of the example placements. As illustrated in the example of Figure 1, the at least one imaging device 120a-120c may preferably be placed in the vicinity of the ceiling of the elevator car 110, i.e. as high as possible. The at least one imaging device 120a-120n may be placed so that the image data provided by the at least one imaging device 120a-120n covers as maximum area of the elevator car 110 as possible. Preferably, the at least one imaging device 120a-120n may be placed so that the image data provided by the at least one imaging device 120a-120n covers the elevator car 110 completely. The at least one imaging device 120a-120n may for example comprise a camera, e.g. a Red-Green-Blue (RGB) camera or a black-and-white camera. Alternatively, the at least one imaging device 120a-120n may for example comprise a time-of-flight (ToF) sensor or a radar sensor. Preferably, each imaging device 120a-120n may be capable of providing image data with high resolution and/or a wide Field of View (FOV) to cover the maximum area of the elevator car 110 by the image data.

The elevator computing unit 130 may be arranged to the elevator car 110. The elevator computing unit 130 may be arranged on a rooftop of the elevator car 110 as illustrated in the example of Figure 1. Alternatively, the elevator computing unit 130 may be arranged to any other location in the elevator car 110 (either inside the elevator car 110 or outside the elevator car 110), any on-site location in an elevator system comprising the elevator car 110, or any off-site location being remote to the elevator system 110, e.g. the elevator computing unit 130 may be implemented as a remote elevator computing unit, a cloud -based elevator computing unit, or any other off-site computing unit. The elevator computing unit 130 may be communicatively coupled to an elevator control system 150 of the elevator system comprising the elevator car 110. The communication between the elevator computing unit 130 and the elevator control system 150 may be based on one or more known communication technologies, either wired or wireless.

Next an example of a method for detecting an entrapment situation inside the elevator car 110 is described by referring to Figure 2. Figure 2 schematically illustrates the method as a flow chart. As discussed above, the detection system 100 preferably comprises one imaging device 120a-120n. Thus, the example of the method is described by using the detection system 100 comprising one imaging device 120a-120n. However, the detection system 100 may also comprise multiple imaging devices 120a-120n, i.e. more than one imaging device 120a-120n. Thus, the detection system using multiple imaging devices may also be utilized in the method for detecting the entrapment situation inside the elevator car 110.

At an initial phase step 200, the elevator computing unit 130 may be in a standby mode, in which the elevator computing unit 130 may wait any communication, e.g. one or more notifications, one or more instructions, and/or one or more commands, from the elevator control system 150. The elevator computing unit 130 may be configured to perform one or more other operations (other than operations relating to the detection of the entrapment situation) assigned for the elevator computing unit 130, when being the in the standby mode. At the initial phase step 200, the imaging device 120a-120n does not provide any image data. At the initial phase step 200, the elevator car 110 is in an operable condition, i.e. the elevator car 110 is capable of moving along an elevator shaft between a plurality of floors under control of the elevator control system 150. In other words, at the initial phase step 200, any failure causing an inoperable condition of the elevator car 110 have not detected by the elevator control system 150.

At a step 210, the elevator computing unit 130 receives an inoperable notification indicating an inoperable condition of the elevator car 110. The inoperable condition of the elevator car 110 may be caused by one or more failures in the elevator system. In the inoperable condition of the elevator car 110, the elevator car 110 may have been stopped between landings causing a possible entrapment situation. In the entrapment situation passengers inside the elevator car 110 may be entrapped inside the elevator car 110. The elevator computing unit 130 may receive the inoperable notification from the elevator control system 150. Alternatively, the elevator computing unit 130 may receive the inoperable notification from an external unit, e.g. a service center, a cloud server, etc.. The elevator control system 150 and/or the external unit may obtain the information about the inoperable condition of the elevator car 110 for example from one or more sensors arranged to the elevator system. For example, the inoperable notification may be a signal comprising an indication of the inoperable condition of the elevator car 110. According to an example, the inoperable notification may further comprise door status information of the elevator car 110. The door status information may for example be door open, door closed, door partially closed. The elevator computing unit 130 may use the door status information for example for a pre-inspection of the possible entrapment situation. For example, if the elevator computing unit 130 detects that the door of the elevator car 110 is closed or only partially open based on the door status information, the elevator computing unit 130 may continue to the next step (i.e. the step 220). On the other hand, if the elevator computing unit 130 detects that the door of the elevator car 110 is open, the elevator computing unit 130 may not necessarily need to continue to the next step, because the passengers inside elevator car 110 may be able to get out from the elevator car 110 by themselves and thus an evacuation of the passengers by service personnel may not be needed.

At a step 220, in response to receiving the inoperable notification, the elevator computing system 130 obtains from the imaging device 120a-120n real-time image data of the interior of the elevator car 110. In other words, the elevator computing unit 130 starts the obtaining of the real-time image data, e.g. triggers a stream of the real-image data, from the imaging device 120a-120n once the notification from the elevator control system 150 is received. The real-time image data may comprise at least one real-time image. Preferably, the real-time image data may comprise a plurality of consecutive real-time images. The real-time image data comprising a plurality of consecutive real-time images enables an improved accuracy of a detection procedure e.g. by enabling a static object elimination step 422 and/or a confidence score definition step 426 in a human object detection phase of the detection procedure as will be described later in this application. With the term "real-time image data" is meant throughout this application image data that is obtainable from the imaging device 120a-120n at that moment. Similarly, with the term "real-time image" is meant throughout this application an image that is obtainable from the imaging device 120 at that moment.

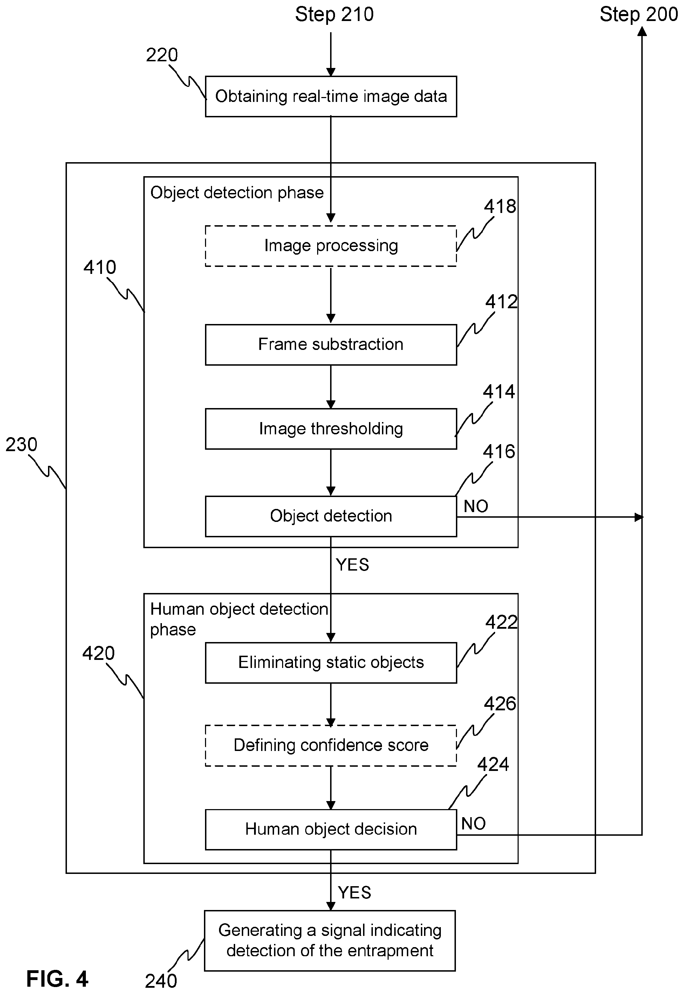

At a step 230, the elevator computing unit 130 performs a detection procedure based on the obtained real-time image data and a previously generated reference image to detect one or more human objects, e.g. one or more passengers, 140 inside the elevator car 110. The previously generated reference image is generated before the detection system 100 may be put into operation for detecting the entrapment situation inside the elevator car 110. In other words, the previously generated reference image needs to be generated before the detection system 100 may be used for detecting the entrapment situation inside the elevator car 110. The reference image may for example be generated at a commissioning stage of the detection system 100. After the commissioning stage of the detection system 100, the detection system 100 is ready to be used for detecting the entrapment situation inside the elevator car 110. An example of the generation of the reference image will be described later in this application referring to Figure 3. An example of the detection procedure at the step 230 will be described later in this application referring to Figure 4.

The detection of the one or more human objects 140 inside the elevator car 110 in the detection procedure at the step 230 may indicate a detection of an entrapment situation. In other words, if the elevator computing unit 130 detects the one or more human objects 140 inside the elevator car 110 at the step 230, the detection of the entrapment situation may be concluded as the outcome of the detection procedure. The elevator computing unit 130 may further check that the elevator car 110 is still in the inoperable condition, when concluding the detection of the entrapment situation. Alternatively, if the elevator computing unit 130 does not detect any human objects 140 in the detection procedure at the step 230, the method may return to the initial phase step 200.

At a step 240, in response to the detecting the one or more human objects 140 in the detection procedure at the step 230, the elevator computing unit 130 generates to the elevator control system 150 and/or to a service center, e.g. a remote monitoring and service center, a signal indicating the detection of the entrapment situation. For example, in case the signal indicating the detection of the entrapment situation is generated to the service center from the elevator computing unit 130, the signal may comprise a service need to inform the service center about the inoperable condition of the elevator car 110 and to evacuate the passengers from the elevator car 110. Alternatively, in case the signal indicating the detection of the entrapment situation is generated to the elevator control system 150 from the elevator computing unit 130, the elevator control system 150 may generate a service need to the service center to inform the service center about the inoperable condition of the elevator car 110 and to evacuate the passengers from the elevator car 110, in response to receiving the signal indicating the detection of the entrapment situation from the elevator computing unit 130. The service center may then instruct the service personnel, e.g. maintenance personnel, to evacuate the passengers entrapped inside the elevator car 110, in response to receiving the service need.

Figure 3 schematically illustrates an example of the generation of the reference image as a flow chart. At a step 310, the elevator computing unit 130 may obtain from the imaging device 120a-120n random image data of the interior of the elevator car 110. The random image data comprises a plurality of images captured in a plurality of random reference scenarios. In other words, there is no specific or predefined point of time, time of day, date, or situation, when each of the plurality of the images of the random image data is captured, and there is no specific or predefined time interval between capturing the images of the plurality of images of the random image data. The plurality of reference scenarios may comprise at least multiple empty elevator car scenarios, i.e. situations where the elevator car 110 is empty of human objects 140. The plurality of reference scenarios may further comprise one or more non-empty elevator car scenarios, i.e. situations where the elevator car 110 is not necessarily empty of the human objects 140. This enables that it is not necessary to know or define that the elevator car 110 is empty of human objects 140, when obtaining the random image data for generation of the reference data. In other words, the possibility to use also the one or more non-empty elevator car scenarios in the generation of the reference image allows some error in a detection whether the elevator car 110 is empty or not.

At a step 320, the elevator computing unit 130 may process the obtained random image data to generate the reference image. The processing of the obtained random image data may comprise for example performing a median operation 322 on pixel values of the plurality of images of the random image data to generate the reference image. In other words, at the step 322 the elevator computing unit 130 may calculate the median of the pixel values the plurality of images of the random image data to generate the reference image. The processing of the obtained random image data at the step 320 may further comprise adjusting 324 the brightness of the obtained random image data and/or the contrast of the obtained random image data before performing the median operation at the step 322. For example, the brightness of the images of the random image data may be increased. The contrast may for example be adjusted according to the brightness level.

At a step 330, the reference image is generated as the outcome of the processing of the random image data at the step 320.

According to an example, the previously generated reference image may be supplemented during the use of the detection system 100. To supplement the reference image the elevator computing unit 130 may obtain from the imaging device 120a-120n further random image data of the interior of the elevator car 110 and process the obtained further random image data to generate the supplemented reference image as discussed above at the step 320. The supplemented reference image may then be used as the reference image in the detection procedure to detect one or more human objects 140 inside the elevator car 110. The further random image data may comprise a plurality of images captured in one or more random reference scenarios. The one or more random reference scenarios may comprise empty elevator car scenarios and/or non-empty elevator car scenarios. The supplementation of the reference image improves the accuracy of the reference image.

Figure 4 schematically discloses an example of the detection procedure at the step 230 of Figure 2 in more detailed manner. As discussed above, at the step 230, the elevator computing unit 130 performs the detection procedure based on the obtained real-time image data and the previously generated reference image to detect one or more human objects 140 inside the elevator car 110. The detection procedure 230 may comprise an object detection phase at a step 410 and a human object detection phase at a step 420. The object detection phase 410 comprises detecting one or more objects inside the elevator car 110. The human object detection phase 420 comprises identifying one or more human objects 140 from among the detected one or more objects at the object detection phase 410.

The object detection phase 410 may comprise for example the following steps: frame subtraction 412, image thresholding 414, and object detection 416. The object detection phase 410 may further comprise an image processing step 418 before the frame subtraction 412. Next examples of the steps of the object detection phase 410 are discussed.

At the frame subtraction step 412, the elevator computing unit 130 may perform a subtraction operation between one real-time image of the obtained real-time image data and the reference image to generate a difference image representing differences between the real-time image and the reference image. The one real-time image of the obtained real-time image data may be any image of the plurality of images of the real-time image data. According to a non-limiting example, the one real-time image of the obtained real-time image data may be the first image of the plurality of images of the real-time image data. The generated difference image may comprise pixel wise differences between the real-time image and the reference image. The real-time image and the reference image may be converted to grayscale for the subtraction operation. The real-time image and the reference image may be subtracted for example by using an absolute operation. In other words, the generated difference image may comprise absolute differences between the pixel values of the real-time image and the pixel values of the reference image. The difference image comprising the absolute differences between the pixel values of the real-time image and the pixel values of the reference image may for example defined according to the following equation:

$$Difference\ image = \left| P_{RT}(i,j) - P_{ref}(i,j) \right|,$$

where $P_{RT}(i,j)$ is the pixel values of the real-time image, $P_{ref}(i,j)$ is the pixel values of the reference image, i is length of the respective image matrix, and j is width of the respective image matrix.

At the image thresholding step 414, the elevator computing unit 130 may filter the generated difference image generated at the step 412 by using a threshold value to divide the pixels of the generated difference image into object pixels and background pixels. The object pixels may represent the one or more objects. The threshold value may be defined based on lighting conditions of the elevator car 110. The image thresholding highlights the differences between the real-time image and the reference image. The image thresholding makes the differences more prominent by suppressing minor differences and enhancing major differences. Each elevator car may have different lighting conditions in comparison to the lighting conditions of other elevator cars. Thus, the same threshold value cannot be used for all elevator cars. Therefore, an adaptive process for defining the threshold value for each elevator car 110 may be used by the elevator computing unit 130. The adaptive process comprises calculating the median of pixel values of the real time image and deciding on the lighting conditions of the elevator car 110. Once the lighting conditions of the elevator car 110 are decided, the threshold value may be chosen from a pre-defined set of threshold values. After the definition of the threshold value, the elevator computing unit 130 may perform the image thresholding by filtering the generated difference image by using the defined threshold value to divide, i.e. categorize, the pixels into the object pixels and the background pixels. The generated difference image may have pixel values between a minimum pixel value and a maximum pixel value. For example, a typical grayscale image may have pixel values between 0 and 255, wherein 0 represents absolute black and 255 represents absolute white. So, any pixel value of the difference image being smaller than the defined threshold value may be assigned as the minimum pixel value, e.g. as 0 in case of the greyscale image, and any pixel value of the difference image being higher than the defined reference value may be assigned as the maximum pixel value, e.g. as 255 in case of the greyscale image. The pixel values assigned as the minimum pixel value may be categorized as the background pixel and the pixel values assigned as the maximum pixel value may be categorized as the object pixel. As the outcome of the image thresholding a categorized difference image is generated. The categorized difference image has pixels with the minimum pixel value belonging to the background pixels and pixels with the maximum pixel value belonging to the object pixels. In other words, the pixel of the categorized difference image having the minimum pixel value, e.g. 0 in case of the greyscale image, belong to the background pixels and the pixels of the difference image having the maximum pixel value, e.g. 255 in case of the greyscale image, belong to the object pixels. The categorized difference image may be normalized between values of 0 and 1, wherein 0 represents black and 1 represents white. The categorized difference image generated as the outcome of the image thresholding at the step 414 may be substantially noisy image. Thus, noise filtration and averaging of the categorized difference image may be used to remove the noise for example by removing small individual object pixels, i.e. objects, and/or merging nearby object pixels as a unified object pixel, i.e. a unified object.

At the object detection step 416, the elevator computing unit 130 may detect one or more objects from the categorized difference image. The white objects, i.e. the object pixels, on top of the black background, i.e. the background pixels, in the categorized difference image correspond to the detected one or more objects. According to an example, the object detection step 416 may further comprise defining, e.g. calculating, by the elevator computing unit 130 the location of each one or more detected object, i.e. the locations of the object pixels. According to another example, the object detection step 416 may further comprise creating, e.g. drawing, by the elevator computing unit 130 a contour, e.g. box, around each detected one or more objects. If no objects are detected, the method may return to the step 200.

As discussed above, the object detection phase 410 may further comprise the image processing step 418 before the image thresholding step 412. The image processing step 418 may comprise image processing of the obtained real-time image data. The image processing of the obtained real-time image data may comprise adjusting brightness of the real-time image data and/or contrast of the real-time image data. For example, the brightness of the real-time image(s) of the real-time image data may be increased. The contrast may for example be adjusted according to the brightness level. This image processing enables that the edges of the detected one or more objects at the step 416 are sharper and thus improves the accuracy of detecting the one or more objects.

The human object detection phase 420 may comprise for example the following steps: eliminating static objects 422 and human object decision 424. The human object detection phase 420 may further comprise defining a confidence score 426 before the human object decision 424. Next examples of the steps of the human object detection phase 420 are discussed.

At a step 422, the elevator computing unit 130 may eliminate static objects from the one or more objects detected at the object detection phase 410. For example, a human standing at one location will still show at least some motion, e.g. upon a movement of their torso, in the multiple consecutive images, therefore the static objects may be considered to be non-human objects, e.g. load. The elimination of the static objects may be performed for example by using multiple consecutive real-time images of the obtained real-time image data. To use the multiple consecutive real-time images of the obtained real-time image data to eliminate the static objects from the one or more objects detected at the object detection phase 410, the elevator computing unit 130 may perform the steps of the object detection phase 410 for each of the multiple consecutive real-time images, i.e. the frame subtraction step 412, the image thresholding step 414, and the object detection step 416, and possibly also the image processing step 418. The elevator computing unit 130 may categorize the detected one or more objects into moving objects and static objects based on pixel wise changes in the multiple consecutive images. The one or more objects indicating pixel wise changes in the consecutive images may be categorized as the moving objects. The one or more objects indicating no pixel wise changes in the consecutive images may be categorized as the static objects. The static objects may then be eliminated from the detected one or more objects. The remaining detected one or more objects may be inferred to be one or more human objects 140. The use of multiple consecutive images comprising black and white pixels (e.g. categorized difference images generated in the image thresholding step 414) in the detection of the moving objects at the step 422 improves the detection of the moving objects, for example in comparison to using multiple consecutive RGB color images in the detection of the moving objects.

At the step 424, the elevator computing unit 130 may decide whether one or more human objects 140 are detected inside the elevator car 110. For example, the elevator computing unit 130 may perform the decision on the detection of the one or more human objects 140 inside the elevator car 110 based on the outcome of the preceding step, e.g. the step 422 discussed above or the optional step 426 that will be discussed later. For example, if one or more human objects 140 are detected inside the elevator car 110 as the outcome of the preceding step, the elevator computing unit 130 may decide that one or more human objects 140 are detected inside the elevator car 110. The decision on the detection of the one or more human objects 140 inside the elevator car 110 may be used to indicate the detection of the entrapment situation inside the elevator car 110 as discussed above referring to the step 230 of Figure 2. According to an example, the human object decision step 424 may comprise before the final decision of the detection of the one or more human objects 140 inside the elevator car 110, the elevator computing unit 130 may use an area thresholding to eliminate any small living objects, e.g. pets, from the detected one or more human objects 140.

According to an example, the human object detection phase 420 may further comprise the step 426 of defining, e.g. calculating, the confidence score for each detected human object 140 by the elevator computing unit 130 before the human object decision step 424. The elevator computing unit 130 may remove from the detected one or more human objects 140 each detected human object 140 with the defined confidence score being lower than a specific threshold. This reduces possible false positive detections of human objects 140 inside the elevator car 110. In the definition of the confidence score, the elevator computing unit 130 may use multiple consecutive real-time images of the real-time image data and calculate an occurrence of each human object 140 in the multiple consecutive real-time images of the real-time image data. To use the multiple consecutive real-time images of the obtained real-time image data to define the confidence score, the elevator computing unit 130 may perform the steps of the object detection phase 410 for each of the multiple consecutive real-time images, i.e. the frame subtraction step 412, the image thresholding step 414, and the object detection step 416, and possibly also the image processing step 418. The elevator computing unit 130 may further calculate an intersection over union (IOU) score for each detected human object. The IOU score represents how large area of the detected objects in the multiple consecutive real-time images of the real-time image data has been overlapped. The higher the IOU score is, the higher is the possibility that the detected human object 140 is actually a human object 140. The confidence score may for example be calculated with the following equation:

$$Confidence\ score = \frac{N_O}{N_{Tot}} * IOU$$

where No is the number of images where the human object is detected, $N_{Tot}$ is the total number of real-time images used in the definition, and IOU is the intersection over union score.

Above the example of the method for detecting the entrapment situation inside the elevator car 110 is described by referring to Figures 2-4 so that the detection system 100 comprises one imaging device 120a-120n. However, the above-described method may also be applied when the detection system 100 comprises multiple imaging device 120a-120n. At the step 220, the elevator computing unit 130 may obtain from each imaging device 120a-120n the respective real-time image data of the interior of the elevator car 110. At the step 230, the elevator computing unit 130 may perform the detection procedure separately for each imaging device 120a-120n to detect one or more human objects. In other words, the elevator computing unit 130 may perform the detection procedure at the step 230 based on the real-time image data obtained from each imaging device 120a-120n and the respective previously generated reference image to detect one or more human objects. The elevator computing unit 130 may generate the respective reference image from the random image data obtained from each imaging device 120a-120n as described above at the steps 310-330 describing generating the reference image from the random image data obtained from the one imaging device 120a-120n. The detection procedure performed for each imaging device 120a-120n at the step 230 may comprise the object detection phase at the step 410 performed for each imaging device 120a-120n and the human object detection phase at the step 420 performed for each imaging device 120a-120n as described above referring to Figure 4.

If the results of the detection procedure performed at the step 230 for the multiple imaging devices 120a-120n differs from each other, e.g. one or more human objects are detected in the detection procedure performed for one or more of the multiple imaging devices 120a-120n indicating the detection of the entrapment situation and no human objects are detected in the detection procedure performed for one or more of the multiple imaging devices 120a-120n indicating no detection of the entrapment situation, the elevator computing unit 130 may perform the final decision of the entrapment situation for example based on the results of the majority. In other words, if the results of the majority of the detection procedures indicates the detection of the entrapment situation, the elevator computing unit 130 may decide as the final decision that the entrapment situation is detected and generate the signal indicating the detection of the entrapment situation at the step 240. Alternatively, if the results of the majority of the detection procedures indicates no detection of the entrapment situation, the elevator computing unit 130 may decide as the final decision that the entrapment situation is not detected. The use of the multiple imaging devices 120a-120n improves the accuracy of the detection of the entrapment situation inside the elevator car 110. For example, possible false positive detections of human objects 140 inside the elevator car 110 may be reduced by using multiple imaging devices 120a-120n, e.g. in the confidence score defining step 426. Alternatively or in addition, for example possible false negative detections of human objects 140 inside the elevator car 110 may be reduced by using multiple imaging devices 120a-120n, e.g. in static objects eliminating step 422.

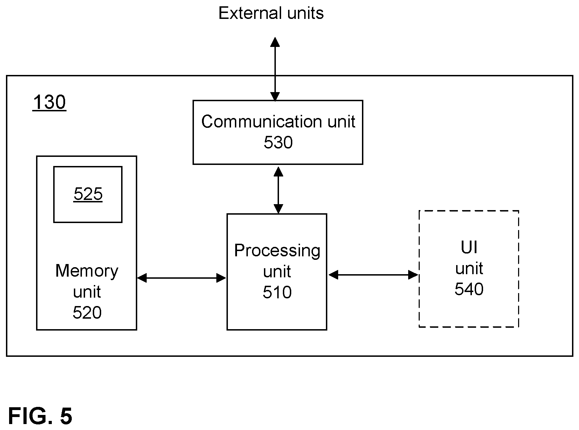

Figure 5 illustrates schematically an example of components of the elevator computing unit 130. The elevator computing unit 130 may comprise a processing unit 510 comprising one or more processors, a memory unit 520 comprising one or more memories, a communication unit 530 comprising one or more communication devices, and possibly a user interface (UI) unit 540. The mentioned elements may be communicatively coupled to each other with e.g. an internal bus. The memory unit 520 may store and maintain portions of a computer program (code) 525, any image data, e.g. the obtained real-time image data, the obtained random image data, etc., the generated images, e.g. the reference image, the difference image, etc., and any other data. The computer program 525 may comprise instructions which, when the computer program 525 is executed by the processing unit 510 of the elevator computing unit 130 may cause the processing unit 510, and thus the elevator computing unit 130 to carry out desired tasks, e.g. one or more of the method steps described above described above. The processing unit 510 may thus be arranged to access the memory unit 520 and retrieve and store any information therefrom and thereto. For sake of clarity, the processor herein refers to any unit suitable for processing information and control the operation of the elevator computing unit 130, among other tasks. The operations may also be implemented with a microcontroller solution with embedded software. Similarly, the memory unit 520 is not limited to a certain type of memory only, but any memory type suitable for storing the described pieces of information may be applied in the context of the present invention. The communication unit 530 provides one or more communication interfaces for communication with any other unit, e.g. the at least one imaging device 120a-120n, the elevator control system 150, the service center, one or more databases, or with any other unit. The user interface unit 540 may comprise one or more input/output (I/O) devices, such as buttons, keyboard, touch screen, microphone, loudspeaker, display and so on, for receiving user input and outputting information. The computer program 525 may be a computer program product that may be comprised in a tangible nonvolatile (non-transitory) computer-readable medium bearing the computer program code 525 embodied therein for use with a computer, i.e. the elevator computing unit 130.

The above-described detection system 100 and method for detecting an entrapment situation inside the elevator car 110 enables an automatic procedure for detecting passengers being entrapped inside inoperable elevator cars. This may improve the safety of the elevator system and thus also the safety of the passengers of the elevator car 110. Because the detection of the entrapment situation is performed by the detection system 100, instead of manually contacting the service providers by the passengers entrapped inside the elevator car 110, the information about the entrapment situation inside the elevator car 110 may be provided to the service more quickly, which in turn may expedite the evacuation of the passengers entrapped inside the elevator car 110. The above-described detection system 100 and method also improve the reliability of the detection of the entrapment situation inside the elevator car 110.

The specific examples provided in the description given above should not be construed as limiting the applicability and/or the interpretation of the appended claims. Lists and groups of examples provided in the description given above are not exhaustive unless otherwise explicitly stated.

## Claims

1.   A method for detecting an entrapment situation inside an elevator car (110), the method comprising:

   receiving (210) an inoperable notification indicating an inoperable condition of the elevator car (110);
   obtaining (220) from at least one imaging device (120a-120n) arranged inside the elevator car (110) real-time image data of the interior of the elevator car (110) in response to receiving the inoperable notification;
   detecting (230) one or more human objects (140) inside the elevator car (110) by performing a detection procedure based on the obtained real-time image data and at least one previously generated reference image, wherein generating of the at least one reference image comprises:

   obtaining (310) from the at least one imaging device (120a-120n) random image data of the interior of the elevator car (110), wherein the random image data comprises a plurality of images captured in a plurality of random reference scenarios, and
   processing (320) the obtained random image data to generate the at least one reference image (330); and

   generating (240) to an elevator control system (150) and/or to a service center a signal indicating a detection of the entrapment situation in response to the detecting the one or more human objects (140).

2.   The method according to claim 1, wherein the detection procedure (230) comprises:

   an object detection phase (410) comprising detecting one or more objects inside the elevator car (110), and
   a human object detection phase (420) comprising identifying one or more human objects (140) from among the detected one or more objects.

3.   The method according to claim 2, wherein the object detection phase (410) comprises:

   a frame subtraction (412) comprising a subtraction operation between one real-time image of the obtained real-time image data and the respective reference image to generate a difference image representing differences between the at least one real-time image and the respective reference image; and
   an image thresholding (414) comprising filtering the generated difference image by using a threshold value to divide the pixels of the generated difference image into object pixels and background pixels to detect the one or more objects inside the elevator car (110), wherein the threshold value is defined based on lighting conditions of the elevator car (110).

4.   The method according to claim 2 or 3, wherein the human object detection phase (420) comprises:

   eliminating static objects (422) from the detected one or more objects by using multiple consecutive real-time images of the obtained real-time image data to categorize the detected one or more objects into moving objects and static objects based on pixel wise changes in the multiple consecutive images, the static objects are eliminated from the detected one or more objects; and

deciding (424) whether one or more human objects (140) are detected inside the elevator car (110).

5. The method according to any of the preceding claims, wherein the plurality of reference scenarios comprise at least multiple empty elevator car scenarios and further one or more non-empty elevator car scenarios.

6. The method according to any of the preceding claims, wherein the processing (320) of the obtained random image data comprises performing (332) a median operation on pixel values of the plurality of images of the random image data to generate the at least one reference image.

7. An elevator computing unit (130) for detecting an entrapment situation inside an elevator car (130), the elevator computing unit (130) comprises

> a processing unit (510) comprising at least one processor; and
> a memory unit (520) comprising at least one memory including computer program code (525);
> wherein the at least one memory and the computer program code (525) are configured to, with the at least one processor, cause the elevator computing unit (130) to perform:

>> receive an inoperable notification indicating an inoperable condition of the elevator car (110);
>> obtain from at least one imaging device (120a-120n) arranged inside the elevator car (110) real-time image data of the interior of the elevator car (110) in response to receiving the inoperable notification;
>> detect one or more human objects (140) inside the elevator car (110) by performing a detection procedure based on the obtained real-time image data and at least one previously generated reference image, wherein to generate the at least one reference image the elevator computing unit (130) is configured to:

>>> obtain from the at least one imaging device (120a-120n) random image data of the interior of the elevator car (110), wherein the random image data comprises a plurality of images captured in a plurality of random reference scenarios, and
>>> process the obtained random image data to generate the at least one reference image; and

>> generate to an elevator control system (150) and/or to a service center a signal indicating a detection of the entrapment situation in response to the detecting the one or more human objects (140).

8. The elevator computing unit (130) according to claim 7, wherein the detection procedure comprises:

> an object detection phase comprising detecting one or more objects inside the elevator car (110), and
> a human object detection phase comprising identifying one or more human objects from among the detected one or more objects (140).

9. The elevator computing unit (130) according to claim 8, wherein the object detection phase comprises that the elevator computing unit (130) is configured to perform:

> a frame subtraction comprising a subtraction operation between one real-time image of the obtained real-time image data and the respective reference image to generate a difference image representing differences between the at least one real-time image and the respective reference image; and
> an image thresholding comprising filtering the determined difference image by using a threshold value to divide the pixels of the generated difference image into object pixels and background pixels to detect the one or more objects inside the elevator car (110), wherein the threshold value is defined based on lighting conditions of the elevator car.

10. The elevator computing unit (130) according to claim 8 or 9, wherein the human object detection phase comprises that the elevator computing unit (130) is configured to:

> eliminate static objects from the detected one or more objects by using multiple consecutive real-time images of the obtained real-time image data to categorize the detected one or more objects into moving objects and static objects based on pixel wise changes in the multiple consecutive images, the static objects are eliminated from the detected one or more objects; and
> decide whether one or more human objects (140) are detected inside the elevator car (110).

11. The elevator computing unit (130) according to claim 10, wherein the human object detection phase further comprises that the elevator computing unit is configured to define a confidence score for each detected one or more human objects (140), wherein each human object with the defined confidence score being lower than a specific threshold is removed from the detected one or more human objects (140).

12. The elevator computing unit (130) according to any of claims 7 to 11, wherein the plurality of reference scenarios comprise at least multiple empty elevator car scenarios and further one or more non-empty elevator car scenarios.

13. The elevator computing unit (130) according to any of claims 7 to 12, wherein the processing of the obtained random image data comprises that the elevator computing unit (130) is configured to perform a median operation on pixel values of the plurality of images of the random image data to generate the at least one reference image.

14. A detection system (100) for detecting an entrapment situation inside an elevator car (110), the detection system (100) comprises:

   at least one imaging device (120a-120n) arranged inside the elevator car (110), and
   an elevator computing unit (130) according to any of claims 7 to 13.

15. A computer program (525) comprising instructions which, when the program is executed by a computer, cause the computer to carry out the method according to any of claims 1 to 6.


**Patentansprüche**

1. Verfahren zum Erkennen einer Einklemmsituation im Inneren einer Aufzugskabine (110), wobei das Verfahren Folgendes umfasst:

   Empfangen (210) einer Betriebsunfähigkeitsbenachrichtigung, die einen Betriebsunfähigkeitszustand der Aufzugskabine (110) anzeigt;
   Erhalten (220) von Echtzeit-Bilddaten des Inneren der Aufzugskabine (110) von mindestens einem in der Aufzugskabine (110) angeordneten Bildgebungsgerät (120a-120n) als Reaktion auf den Empfang der Betriebsunfähigkeitsbenachrichtigung;
   Erkennen (230) eines oder mehrerer menschlicher Objekte (140) im Inneren der Aufzugskabine (110) durch Ausführen eines Erkennungsverfahrens basierend auf den erhaltenen Echtzeit-Bilddaten und mindestens einem zuvor erzeugten Referenzbild, wobei das Erzeugen des mindestens einen Referenzbildes Folgendes umfasst:

   Erhalten (310) von zufälligen Bilddaten des Inneren der Aufzugskabine (110) von dem mindestens einen Bildgebungsgerät (120a-120n), wobei die zufälligen Bilddaten eine Vielzahl von Bildern umfassen, die in einer Vielzahl von zufälligen Referenzszenarien aufgenommen wurden, und
   Verarbeiten (320) der erhaltenen zufälligen Bilddaten, um das mindestens eine Referenzbild (330) zu erzeugen; und
   und Erzeugen (240) eines Signals an ein Aufzugssteuersystem (150) und/oder ein Servicecenter, das die Erkennung einer Einklemmsituation anzeigt, als Reaktion auf die Erkennung des einen oder der mehreren menschlichen Objekte (140).

2. Verfahren nach Anspruch 1, wobei die Erkennungsprozedur (230) Folgendes umfasst:

   eine Objekterkennungsphase (410), die das Erkennen eines oder mehrerer Objekte innerhalb der Aufzugskabine (110) umfasst, und
   eine Phase (420) zur Erkennung menschlicher Objekte, die das Identifizieren eines oder mehrerer menschlicher Objekte (140) aus den erkannten einem oder mehreren Objekten umfasst.

3. Verfahren nach Anspruch 2, wobei die Objekterkennungsphase (410) Folgendes umfasst:

   eine Frame-Subtraktion (412), die eine Subtraktionsoperation zwischen einem Echtzeitbild der erhaltenen Echtzeitbilddaten und dem jeweiligen Referenzbild umfasst, um ein Differenzbild zu erzeugen, das Unterschiede zwischen dem mindestens einen Echtzeitbild und dem jeweiligen Referenzbild darstellt; und
   eine Bildschwellenwertverarbeitung (414), die das Filtern des erzeugten Differenzbilds unter Verwendung eines Schwellenwerts umfasst, um die Pixel des erzeugten Differenzbilds in Objektpixel und Hintergrundpixel zu unterteilen, um das eine oder die mehreren Objekte im Inneren der Aufzugskabine (110) zu erkennen, wobei der Schwellenwert basierend auf den Lichtverhältnissen der Aufzugskabine (110) definiert wird.

4. Verfahren nach Anspruch 2 oder 3, wobei die Phase der Erkennung menschlicher Objekte (420) Folgendes umfasst:

Eliminieren statischer Objekte (422) aus den erkannten Objekten durch Verwendung mehrerer aufeinanderfolgender Echtzeitbilder der erhaltenen Echtzeitbilddaten, um die erkannten Objekte auf der Grundlage pixelweiser Änderungen in den mehreren aufeinanderfolgenden Bildern in bewegte und statische Objekte zu kategorisieren, wobei die statischen Objekte aus den erkannten Objekten eliminiert werden; und
Entscheiden (424), ob ein oder mehrere menschliche Objekte (140) im Inneren der Aufzugskabine (110) erkannt werden.

5. Verfahren nach einem der vorhergehenden Ansprüche, wobei die Vielzahl von Referenzszenarien mindestens mehrere Szenarien mit einer leeren Aufzugskabine und ferner ein oder mehrere Szenarien mit einer nicht leeren Aufzugskabine umfasst.

6. Verfahren nach einem der vorhergehenden Ansprüche, wobei die Verarbeitung (320) der erhaltenen zufälligen Bilddaten das Durchführen (332) einer Medianoperation an Pixelwerten der Vielzahl von Bildern der zufälligen Bilddaten umfasst, um das mindestens eine Referenzbild zu erzeugen.

7. Aufzugsrechnereinheit (130) zum Erkennen einer Einklemmsituation in einer Aufzugskabine (130), wobei die Aufzugsrechnereinheit (130) Folgendes umfasst eine Verarbeitungseinheit (510), die mindestens einen Prozessor umfasst; und

eine Speichereinheit (520), die mindestens einen Speicher mit Computerprogrammcode (525) umfasst;
wobei der mindestens eine Speicher und der Computerprogrammcode (525) so konfiguriert sind, dass sie zusammen mit dem mindestens einen Prozessor die Aufzugsrecheneinheit (130) veranlassen, Folgendes auszuführen:

Empfangen einer Betriebsunfähigkeitsbenachrichtigung, die auf einen Betriebsunfähigkeitszustand der Aufzugskabine (110) hinweist;
Erhalten von Echtzeit-Bilddaten des Inneren der Aufzugskabine (110) von mindestens einem in der Aufzugskabine (110) angeordneten Bildgebungsgerät (120a-120n) als Reaktion auf den Empfang der Betriebsunfähigkeitsbenachrichtigung;
Erkennen eines oder mehrerer menschlicher Objekte (140) im Inneren der Aufzugskabine (110) durch Ausführen eines Erkennungsverfahrens basierend auf den erhaltenen Echtzeit-Bilddaten und mindestens einem zuvor erzeugten Referenzbild, wobei die Aufzugsrecheneinheit (130) zum Erzeugen des mindestens einen Referenzbildes dazu konfiguriert ist:

von dem mindestens einen Bildgebungsgerät (120a-120n) zufällige Bilddaten des Inneren der Aufzugskabine (110) zu erhalten, wobei die zufälligen Bilddaten eine Vielzahl von Bildern umfassen, die in einer Vielzahl von zufälligen Referenzszenarien aufgenommen wurden, und
die erhaltenen zufälligen Bilddaten zu verarbeiten, um das mindestens eine Referenzbild zu erzeugen; und
als Reaktion auf die Erkennung des einen oder der mehreren menschlichen Objekte (140) ein Signal an ein Aufzugssteuerungssystem (150) und/oder ein Servicecenter zu erzeugen, das die Erkennung einer Einklemmsituation anzeigt.

8. Aufzugsrecheneinheit (130) nach Anspruch 7, wobei die Erkennungsprozedur Folgendes umfasst:

eine Objekterkennungsphase, die das Erkennen eines oder mehrerer Objekte innerhalb der Aufzugskabine (110) umfasst, und
eine Phase der Erkennung menschlicher Objekte, die das Identifizieren eines oder mehrerer menschlicher Objekte aus den erkannten einem oder mehreren Objekten umfasst (140).

9. Aufzugsrecheneinheit (130) nach Anspruch 8, wobei die Objekterkennungsphase umfasst, dass die Aufzugsrecheneinheit (130) dazu konfiguriert ist, Folgendes durchzuführen:

eine Frame-Subtraktion, die eine Subtraktionsoperation zwischen einem Echtzeitbild der erhaltenen Echtzeitbilddaten und dem jeweiligen Referenzbild umfasst, um ein Differenzbild zu erzeugen, das Unterschiede zwischen dem mindestens einen Echtzeitbild und dem jeweiligen Referenzbild darstellt; und

eine Bildschwellenwertbildung, die das Filtern des ermittelten Differenzbilds unter Verwendung eines Schwellenwerts umfasst, um die Pixel des erzeugten Differenzbilds in Objektpixel und Hintergrundpixel zu unterteilen, um das eine oder die mehreren Objekte im Inneren der Aufzugskabine (110) zu erkennen, wobei der Schwellenwert basierend auf den Lichtverhältnissen der Aufzugskabine definiert wird.

10. Aufzugsrecheneinheit (130) nach Anspruch 8 oder 9, wobei die Phase der Erkennung menschlicher Objekte umfasst, dass die Aufzugsrecheneinheit (130) dazu konfiguriert ist:

statische Objekte aus den erkannten einem oder mehreren Objekten unter Verwendung mehrerer aufeinanderfolgender Echtzeitbilder der gewonnenen Echtzeitbilddaten zu eliminieren, um das oder die erkannten Objekte auf der Grundlage von pixelweisen Änderungen in den mehreren aufeinanderfolgenden Bildern in bewegte und statische Objekte zu kategorisieren, wobei die statischen Objekte aus den erkannten einem oder mehreren Objekten eliminiert werden; und

zu entscheiden, ob ein oder mehrere menschliche Objekte (140) im Inneren der Aufzugskabine (110) erkannt werden.

11. Die Aufzugsrecheneinheit (130) nach Anspruch 10, wobei die Phase der Erkennung menschlicher Objekte ferner umfasst, dass die Aufzugsrecheneinheit so konfiguriert ist, dass sie für jedes erkannte menschliche Objekt (140) einen Vertrauenswert definiert, wobei jedes menschliche Objekt, dessen definierter Konfidenzwert unter einem bestimmten Schwellenwert liegt, aus den erkannten einem oder mehreren menschlichen Objekten (140) entfernt wird.

12. Aufzugsrecheneinheit (130) nach einem der Ansprüche 7 bis 11, wobei die Vielzahl von Referenzszenarien mindestens mehrere Szenarien mit einer leeren Aufzugskabine und ferner ein oder mehrere Szenarien mit einer nicht leeren Aufzugskabine umfasst.

13. Aufzugsrecheneinheit (130) nach einem der Ansprüche 7 bis 12, wobei die Verarbeitung der erhaltenen zufälligen Bilddaten umfasst, dass die Aufzugsrecheneinheit (130) dazu konfiguriert ist, eine Medianoperation an Pixelwerten der Vielzahl von Bildern der zufälligen Bilddaten durchzuführen, um das mindestens eine Referenzbild zu erzeugen.

14. Erkennungssystem (100) zum Erkennen einer Einklemmsituation im Inneren einer Aufzugskabine (110), wobei das Erkennungssystem (100) Folgendes umfasst:

mindestens ein in der Aufzugskabine (110) angeordnetes Bildgebungsgerät (120a-120n) und

eine Aufzugsrechnereinheit (130) nach einem der Ansprüche 7 bis 13.

15. Computerprogramm (525), das Anweisungen umfasst, die, wenn das Programm von einem Computer ausgeführt wird, den Computer veranlassen, das Verfahren nach einem der Ansprüche 1 bis 6 auszuführen.

## Revendications

1. Procédé de détection d'une situation de piégeage à l'intérieur d'une cabine d'ascenseur (110), le procédé comprenant :

la réception (210) d'une notification de non-fonctionnement indiquant un état de non-fonctionnement de la cabine d'ascenseur (110) ;

l'obtention (220) à partir d'au moins un dispositif d'imagerie (120a-120n) agencé à l'intérieur de la cabine d'ascenseur (110) de données d'image en temps réel de l'intérieur de la cabine d'ascenseur (110) en réponse à la réception de la notification de non-fonctionnement ;

la détection (230) d'un ou de plusieurs objets humains (140) à l'intérieur de la cabine d'ascenseur (110) en réalisant une procédure de détection sur la base des données d'image en temps réel obtenues et d'au moins une image de référence générée précédemment, dans lequel la génération de l'au moins une image de référence comprend : l'obtention (310) à partir de l'au moins un dispositif d'imagerie (120a-120n) de données d'image aléatoires de l'intérieur de la cabine d'ascenseur (110), dans lequel les données d'image aléatoires comprennent une pluralité d'images capturées dans une pluralité de scénarios de référence aléatoires, et

le traitement (320) des données d'image aléatoires obtenues pour générer l'au moins une image de référence (330) ; et

la génération (240) vers un système de commande d'ascenseur (150) et/ou vers un centre de service d'un signal indiquant une détection de la situation de piégeage en réponse à la détection des un ou plusieurs objets humains (140).

2. Procédé selon la revendication 1, dans lequel la procédure de détection (230) comprend :

une phase de détection d'objet (410) comprenant la détection d'un ou de plusieurs objets à l'intérieur de la cabine d'ascenseur (110), et

une phase de détection d'objet humain (420) comprenant l'identification d'un ou de plusieurs objets humains (140) parmi les un ou plusieurs objets détectés.

3. Procédé selon la revendication 2, dans lequel la phase de détection d'objet (410) comprend :

une soustraction de trame (412) comprenant une opération de soustraction entre une image en temps réel des données d'image en temps réel obtenues et l'image de référence respective pour générer une image de différence représentant des différences entre l'au moins une image en temps réel et l'image de référence respective ; et

un seuillage d'image (414) comprenant le filtrage de l'image de différence générée à l'aide d'une valeur seuil pour diviser les pixels de l'image de différence générée en pixels d'objet et pixels d'arrière-plan pour détecter les un ou plusieurs objets à l'intérieur de la cabine d'ascenseur (110), dans lequel la valeur seuil est définie sur la base des conditions d'éclairage de la cabine d'ascenseur (110).

4. Procédé selon la revendication 2 ou 3, dans lequel la phase de détection d'objet humain (420) comprend :

l'élimination d'objets statiques (422) des un ou plusieurs objets détectés à l'aide de multiples images en temps réel consécutives des données d'image en temps réel obtenues pour catégoriser les un ou plusieurs objets détectés en objets mobiles et objets statiques sur la base de changements de pixels dans les multiples images consécutives, les objets statiques sont éliminés des un ou plusieurs objets détectés ; et

la détermination (424) du fait de savoir si un ou plusieurs objets humains (140) sont détectés à l'intérieur de la cabine d'ascenseur (110).

5. Procédé selon l'une quelconque des revendications précédentes, dans lequel la pluralité de scénarios de référence comprennent au moins de multiples scénarios de cabine d'ascenseur vide et également un ou plusieurs scénarios de cabine d'ascenseur non vide.

6. Procédé selon l'une quelconque des revendications précédentes, dans lequel le traitement (320) des données d'image aléatoires obtenues comprend la réalisation (332) d'une opération médiane sur des valeurs de pixels de la pluralité d'images des données d'image aléatoires pour générer l'au moins une image de référence.

7. Unité de calcul d'ascenseur (130) pour détecter une situation de piégeage à l'intérieur d'une cabine d'ascenseur (130), l'unité de calcul d'ascenseur (130) comprend

une unité de traitement (510) comprenant au moins un processeur ; et

une unité de mémoire (520) comprenant au moins une mémoire comportant un code de programme informatique (525) ;

dans laquelle l'au moins une mémoire et le code de programme informatique (525) sont configurés pour, avec l'au moins un processeur, amener l'unité de calcul d'ascenseur (130) à réaliser :

la réception d'une notification de non-fonctionnement indiquant un état de non-fonctionnement de la cabine d'ascenseur (110) ;

l'obtention à partir d'au moins un dispositif d'imagerie (120a-120n) agencé à l'intérieur de la cabine d'ascenseur (110) de données d'image en temps réel de l'intérieur de la cabine d'ascenseur (110) en réponse à la réception de la notification de non-fonctionnement ;

la détection d'un ou de plusieurs objets humains (140) à l'intérieur de la cabine d'ascenseur (110) en réalisant une procédure de détection sur la base des données d'image en temps réel obtenues et d'au moins une image de référence générée précédemment, dans laquelle pour générer l'au moins une image de référence, l'unité de calcul d'ascenseur (130) est configurée pour :

obtenir à partir de l'au moins un dispositif d'imagerie (120a-120n) les données d'image aléatoires de l'intérieur de la cabine d'ascenseur (110), dans laquelle les données d'image aléatoires comprennent une pluralité d'images capturées dans une pluralité de scénarios de référence aléatoires, et traiter les données d'image aléatoires obtenues pour générer l'au moins une image de référence ; et générer vers un système de commande d'ascenseur (150) et/ou vers un centre de service un signal indiquant une détection de la situation de piégeage en réponse à la détection des un ou plusieurs objets humains (140).

8. Unité de calcul d'ascenseur (130) selon la revendication 7, dans laquelle la procédure de détection comprend :

une phase de détection d'objet comprenant la détection d'un ou de plusieurs objets à l'intérieur de la cabine d'ascenseur (110), et une phase de détection d'objet humain comprenant l'identification d'un ou de plusieurs objets humains parmi les un ou plusieurs objets détectés (140).

9. Unité de calcul d'ascenseur (130) selon la revendication 8, dans laquelle la phase de détection d'objet comprend la configuration de l'unité de calcul d'ascenseur (130) pour réaliser :

une soustraction de trame comprenant une opération de soustraction entre une image en temps réel des données d'image en temps réel obtenues et l'image de référence respective pour générer une image de différence représentant des différences entre l'au moins une image en temps réel et l'image de référence respective ; et un seuillage d'image comprenant le filtrage de l'image de différence déterminée à l'aide d'une valeur seuil pour diviser les pixels de l'image de différence générée en pixels d'objet et pixels d'arrière-plan pour détecter les un ou plusieurs objets à l'intérieur de la cabine d'ascenseur (110), dans laquelle la valeur seuil est définie sur la base des conditions d'éclairage de la cabine d'ascenseur.

10. Unité de calcul d'ascenseur (130) selon la revendication 8 ou 9, dans laquelle la phase de détection d'objet humain comprend la configuration de l'unité de calcul d'ascenseur (130) pour :

éliminer des objets statiques des un ou plusieurs objets détectés à l'aide de multiples images en temps réel consécutives des données d'image en temps réel obtenues pour catégoriser les un ou plusieurs objets détectés en objets mobiles et objets statiques sur la base de changements de pixels dans les multiples images consécutives, les objets statiques sont éliminés des un ou plusieurs objets détectés ; et déterminer le fait de savoir si un ou plusieurs objets humains (140) sont détectés à l'intérieur de la cabine d'ascenseur (110).

11. Unité de calcul d'ascenseur (130) selon la revendication 10, dans laquelle la phase de détection d'objet humain comprend également la configuration de l'unité de calcul d'ascenseur pour définir un score de confiance pour chacun des un ou plusieurs objets humains détectés (140), dans laquelle chaque objet humain avec le score de confiance défini étant inférieur à un seuil spécifique est retiré des un ou plusieurs objets humains détectés (140).

12. Unité de calcul d'ascenseur (130) selon l'une quelconque des revendications 7 à 11, dans laquelle la pluralité de scénarios de référence comprennent au moins de multiples scénarios de cabine d'ascenseur vide et également un ou plusieurs scénarios de cabine d'ascenseur non vide.

13. Unité de calcul d'ascenseur (130) selon l'une quelconque des revendications 7 à 12, dans laquelle le traitement des données d'image aléatoires obtenues comprend la configuration de l'unité de calcul d'ascenseur (130) pour réaliser une opération médiane sur des valeurs de pixels de la pluralité d'images des données d'image aléatoires pour générer l'au moins une image de référence.

14. Système de détection (100) pour détecter une situation de piégeage à l'intérieur d'une cabine d'ascenseur (110), le système de détection (100) comprend :

au moins un dispositif d'imagerie (120a-120n) agencé à l'intérieur de la cabine d'ascenseur (110), et

une unité de calcul d'ascenseur (130) selon l'une quelconque des revendications 7 à 13.

15. Programme informatique (525) comprenant des instructions qui, lorsque le programme est exécuté par un ordinateur, amènent l'ordinateur à réaliser le procédé selon l'une quelconque des revendications 1 à 6.

150

130

120n

100

120b    120a

140

110

**FIG. 1**

200    Initial phase

210    Receiving inoperation indication

220    Obtaining real-time image data

230    Human objects?    NO

YES

240    Generating a signal indicating detection of the entrapment

**FIG. 2**

310    Obtaining random image data

Processing random image data

320

324    Adjusting brightness and/or contrast

322    Median operation

330    Reference image

**FIG. 3**

Step 210                                    Step 200

220

Obtaining real-time image data

Object detection phase

                                            418
┌ ─ ─ ─ ─ ─ ─ ─ ─ ─ ─ ─ ─ ─ ─ ┐
          Image processing
└ ─ ─ ─ ─ ─ ─ ─ ─ ─ ─ ─ ─ ─ ─ ┘

410

                                            412
Frame substraction

                                            414
Image thresholding

                                            416

230

Object detection                    NO

YES

Human object detection
phase
                                            422
Eliminating static objects

420

                                            426
┌ ─ ─ ─ ─ ─ ─ ─ ─ ─ ─ ─ ─ ─ ─ ┐
      Defining confidence score
└ ─ ─ ─ ─ ─ ─ ─ ─ ─ ─ ─ ─ ─ ─ ┘

                                            424

Human object decision              NO

YES

Generating a signal indicating
detection of the entrapment

**FIG. 4**         240

External units

130

Communication unit
530

525

Memory
unit
520

Processing
unit
510

UI
unit
540

**FIG. 5**

**EP 4 486 676 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107324166 B